# EUROPÄISCHE PATENTANMELDUNG

(11) **EP 0 702 890 A2**
(43) Veröffentlichungstag der Anmeldung: **27.03.1996**
(21) Anmeldenummer: 95107894.8
(22) Anmeldetag: 24.05.1995
(51) Int. Cl.: A01C 15/04, A01C 7/08

(54) **Pneumatische Verteilmaschine**

(30) Priorität: 24.09.1994 DE 4434248
(71) Anmelder: Amazonen-Werke H. Dreyer GmbH & Co. KG, D-49205 Hasbergen (DE)
(72) Erfinder: Wiemeyer, Benno, D-49504 Lotte-Halen (DE)

(57) **Zusammenfassung**

Pneumatische Verteillmaschine mit einem Vorratsbehälter, dem zumindest ein Dosierorgan zugeordnet ist, welches das sich im Vorratsbehälter befindliche Material über eine Einschleuseinrichtung in eine zentrale pneumatische Pneumatische Verteilmaschine mit einem Vorratsbehälter, dem zumindest ein Förderleitung einleitet, die in einem Verteilerkopf mündet, an dem mehrere Ausbringleitungen angeschlossen sind, auf die der Verteilerkopf das Material aufteilt. Es ist vorgesehen, daß ein Sensor vor oder im Auftreffbereich des durch die Förderleitung geförderten Materials und/oder dem Verteilerkopf zugeordnet ist.

## Beschreibung

Die Erfindung betrifft eine pneumatische Verteilmaschine gemäß des Oberbegriffes des Patentanspruches 1.

Eine derartige Verteilmaschine ist durch die EP 03 22 046 B1 bekannt. Bei dieser pneumatischen Verteilmaschine ist in dem Luftstrom mindestens ein Sensor zur Strömungsmessung des Luftstromes angeordnet. Mittels dieses Sensors wird überwacht, ob eine ausreichende Luftströmung zur Verteilung des Saatgutes vorhanden ist. Mittels dieses Sensors wird also eine ausreichende Gebläseleistung überwacht.

Mit Hilfe dieses Sensors ist es jedoch nicht möglich, festzustellen, ob Saatgut ausgebracht wird.

Durch die DE-OS 29 01 767 ist eine weitere pneumatische Verteilmaschine bekannt, mittels der Saatgut zu verteilen ist. An jedem Ende der Ausbringleitung ist ein Prallsensor angeordnet, über welchen festgestellt werden kann, ob Saatgut ausgebracht wird.

Der Erfindung liegt die Aufgabe zugrunde, auf einfache Weise bei einer pneumatischen Verteilmaschine mit einer zentralen pneumatischen Förderleitung, die in einem Verteilerkopf mündet, den Ausbringvorgang überwachen zu können.

Diese Aufgabe wird erfindungsgemäß durch die Kennzeichende Maßnahme des Anspruches 1 gelöst. Mittels dieses Sensors kann in einfachster Weise der Ausbringvorgang überwacht werden. Mittels des Sensors kann auch die Aufprallintensität des Saatgutes auf den Verteilerkopf ermittelt werden. Die Aufprallintensität ist ein Maß für einen ausreichenden Förderluftstrom in der Förderleitung und für die Ausbringmenge.

Als besonders vorteilhafte Stelle zur Anordnung des Sensors hat sich herausgestellt, daß der Sensor zur Überwachung des Ausbringens von Material im zentralen Prallbereich des Verteilerkopfes angeordnet ist.

Auch ist es möglich, den Sensor im Außenkrümmungsbereich des Krümmers der Förderleitung anzuordnen.

In einfacher Weise kann der Sensor ein Mikrofon sein. Mittels dieses Mikrofons kann festgestellt werden, ob und welche Menge und wie stark Saatgut an den Verteilerkopf prallt und somit ausgebracht wird.

Die Ermittlung und Überprüfung der Ausbringmenge in Verbindung mit der Überwachung der Luftströmung läßt sich dadurch realisieren, daß der Sensor mit einer Auswerteeinrichtung verbunden ist, und daß über die Auswerteeinrichtung Grenzwerte, die ein Maß für die Ausbringmenge darstellen, vorgebbar sind, und daß bei Über- bzw. Unterschreiten der Grenzwerte eine Alarmsignal erzeugt wird.

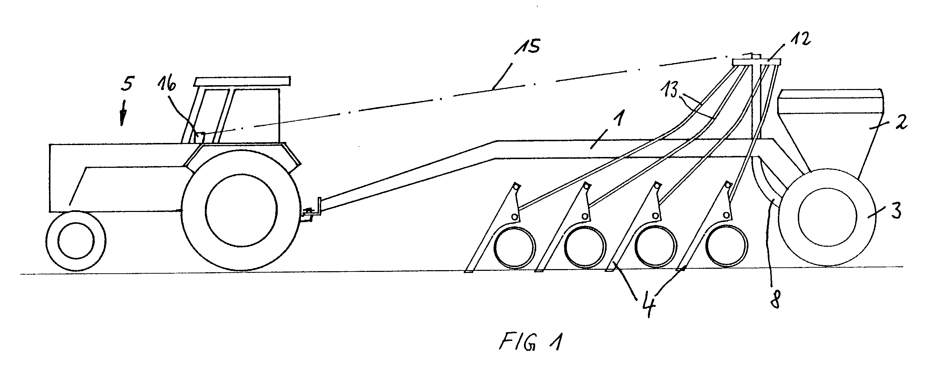

Weitere Einzelheiten der Erfindung sind den übrigen Unteransprüchen, der Beispielsbeschreibung und den Zeichnungen zu entnehmen. Hierbei zeigen
- Fig. 1: eine pneumatische Verteilmaschine in Seitenansicht,
- Fig. 2: den Dosiermechanismus und die Anordnung des Sensors auf den Prallkopf in Teilansicht der Verteilmaschine und vergrößerter Maßstab und
- Fig. 3: eine weitere Anordnung des Sensor in der Darstellungsweise gemäß Fig. 2.

Die Verteilmaschine weist den Rahmen 1, den Vorratsbehälter 2, die Laufräder 3 und die Säschare 4 auf. Über die an dem Rahmen 1 angeordneten Deichsel ist die Verteilmaschine an dem Schlepper 5 angekuppelt.

Im unteren Bereich des Vorratsbehälters 2 ist das zentrale Dosierorgan 6 angeordnet, welches das sich im Vorratsbehälter 2 befindlichem Material in einstellbaren Mengen über die Einschleuseinrichtung 7 in die zentrale pneumatische Förderleitung 8 einleitet. Die Förderleitung 8 ist an das Gebläse 9, welches von einer bekannten und daher nicht näher dargestellten Kraftquelle angetrieben wird, angeschlossen. Die Förderleitung 8 weist den Krümmer 10 auf, und das Steigrohr 11 auf. Am Ende der Förderleitung 8 bzw. des Steigrohres 11 ist der als Prallkopf 12 ausgebildete Verteilerkopf angeordnet. Über den Verteilerkopf 12 wird das Material auf mehrere Ausbringleitungen 13 in gleichmäßiger Weise aufgeteilt. Die Ausbringleitungen 13 münden in den Säscharen 4, über welche das Material im Boden abgelegt wird.

Im zentralen Prallbereich des Verteilerkopfes 12 ist ein Sensor 14 zur Überwachung des Ausbringens des Materials angeordnet. Der Sensor 14 ist als Prallsensor ausgebildet und in einfacher Weise ein Mikrofon. Mittels dieses Sensors 14 kann festgestellt werden, ob, wieviel und wie stark Saatgut gegen den Verteilerkopf 12 prallt. Hierdurch wird überwacht, ob eine ausreichende Luftströmung in der Förderleitung 8 vorhanden ist. Hierdurch wird indirekt ein Rückschluß auf eine ausreichende Gebläseantriebsdrehzahl und Gebläseleistung des Gebläses 9 erzielt.

Der Sensor 14 ist mittels einer geeigneten Übertragungseinrichtung 15, die als Funkverbindung oder Kabelverbindung ausgebildet sein kann, mit einer Anzeigevorrichtung 16, die auf dem Schlepper 5 angeordnet ist, verbunden. Der Anzeigevorrichtung 16 oder unmittelbar dem Sensor 14 kann eine Auswerteeinrichtung zugeordnet sein, die die von dem Sensor 14 aufgenommenen Impulse entsprechend auswertet.

Desweiteren kann der Sensor 14 einer Auswerteeinrichtung verbunden sein und über die Auswerteeinrichtung sind Grenzwerte, die ein Maß für die Ausbringmenge darstellen, vorgebbar und bei einem über- bzw. unterschreiten der Grenzwerte wird ein Alarmsignal erzeugt.

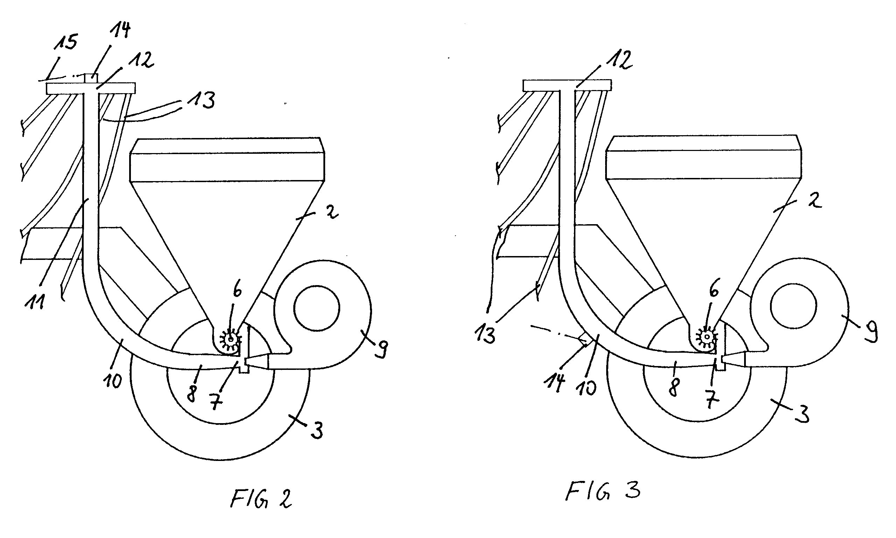

Bei dem Ausführungsbeispiel gemäß Fig. 3 ist der Sensor 14 nicht dem zentralen Prallbereich des Verteilerkopfes 12, sondern im Außenkrümmungsbereich des Krümmers 10 angeordnet.

## Patentansprüche

1. Pneumatische Verteilmaschine mit einem Vorratsbehälter, dem zumindest ein Dosierorgan zugeordnet ist, welches das sich im Vorratsbehälter befindliche Material über eine Einschleuseinrichtung in eine zentrale pneumatische Pneumatische Verteilmaschine mit einem Vorratsbehälter, dem zumindest ein Förderleitung einleitet, die in einem Verteilerkopf mündet, an dem mehrere Ausbringleitungen angeschlossen sind, auf die der Verteilerkopf das Material aufteilt, dadurch gekennzeichnet, daß ein Sensor (14) vor oder im Auftreffbereich des durch die Förderleitung (8) geförderten Materials und/oder dem Verteilerkopf (12) zugeordnet ist.

2. Pneumatische Verteilmaschine nach Anspruch 1, dadurch gekennzeichnet, daß im zentralen Prallbereich des Verteilerkopfes (12) ein Sensor (14) zur Überwachung des Ausbringens von Material angeordnet ist.

3. Pneumatische Verteilmaschine, deren Förderleitung einen Krümmer aufweist, dadurch gekennzeichnet, daß im Außenkrümmungsbereich des Krümmers (10) der Sensor angeordnet ist.

4. Verteilmaschine nach einem oder mehreren der vorstehenden Ansprüche, dadurch gekennzeichnet, daß der Sensor (14) als Prallsensor ausgebildet ist.

5. Verteilmaschine nach einem oder mehreren der vorstehenden Ansprüche, dadurch gekennzeichnet, daß der Sensor (14) ein Mikrofon ist.

6. Verteilmaschine nach einem oder mehreren der vorstehenden Ansprüche, dadurch gekennzeichnet, daß der Sensor (14) mit einer Auswerteeinrichtung verbunden ist, daß über die Auswerteeinrichtung Grenzwerte, die ein Maß für die Ausbringmenge darstellen, vorgebbar sind, und daß bei über- bzw. unterschreiten der Grenzwerte ein Alarmsignal erzeugt wird.
